# EUROPÄISCHE PATENTSCHRIFT

(11) **EP 0 918 662 B1**
(45) Veröffentlichungstag und Bekanntmachung des Hinweises auf die Patenterteilung: **26.03.2003**
(21) Anmeldenummer: 98933630.0
(22) Anmeldetag: 18.06.1998
(51) Int. Cl.: B60R 9/055

(54) **GEPÄCKBOX FÜR KRAFTFAHRZEUGE**
LUGGAGE BOX FOR MOTOR VEHICLES
BOITE PORTE-BAGAGES POUR VEHICULES A MOTEUR

(30) Priorität: 25.06.1997 IT BZ970037
(43) Veröffentlichungstag der Anmeldung: 02.06.1999
(73) Patentinhaber: Sinnova SRL, 39012 Merano (IT)
(72) Erfinder: SINN, Jul, I-39012 Merano (IT)
(74) Vertreter: Oberosler, Ludwig
(86) Internationale Anmeldenummer: EP9803676
(87) Internationale Veröffentlichungsnummer: WO99000274

(56) Entgegenhaltungen:
- WO-A-95/14590
- DE-A- 2 048 462
- DE-A- 3 802 574
- DE-U- 1 933 493
- FR-A- 2 521 931
- FR-A- 2 642 025
- FR-A- 2 666 285

## Beschreibung

Die Erfindung bezieht sich auf eine, auf einem Kraftfahrzeugdach, Freizeitmobildach oder Wohnwagendach anbringbare, oder teilweise einsetzbare, Gepäckbox zwecks Unterbringung von Gepäck, Sportgerät und/oder Campingausrüstung und dergleichen, welches nicht im Inneren oder im Gepäckraum des Fahrzeuges untergebracht werden kann. Es sind verschiedene derartige Behälter, beispielsweise aus der DE-O-3910952 und aus der DE 39 35 944 bekannt, diese sind derart bemessen, daß sie zumindest zwei Paare Schier aufnehmen können, wobei die Außenform gleichzeitig aerodynamisch vorteilhaft gestaltet ist. Es ist weiters bekannt die Tiefe der Bodenschale derartiger Boxen im Bereich zwischen den Holmen des Dachträgers für das Unterbringen weiterer Gepäckstücke, z.B. von Schischuhen, zu nutzen.

Um die Herstellungskosten zu senken ist es bekannt Schalen zu verwenden welche, sei es gemäß der Längsachse, als auch gemäß einer Querachse, symmetrisch sind. Es ist weiters bekannt die Schalen derartiger Gepäckboxen auch für andere Zwecke zu nutzen, wie z.B als Teile eines Katamarans
(DE-O-39 10 951) oder, durch Anheben einer der Schalen, als Schlafkoje, bzw. als Boot (DE-O-25 39 093).

Aus der DE 20 48 462 A, die die Merkmale des Oberbegriffs des Anspruchs 1 zeigt, ist bekannt daß bei einer Gepäcksbox das Boot welches als Deckel dient mit seinem Rand den seitlich vorstehenden umlaufenden Rand der Bodenschale übergreift um zu verhindern daß Regenwasser ins Innere der Box eindringt.

All diese Mehrfachverwendungen der Schalen der Gepäckbox bringen den Nachteil mit sich, daß der Inhalt, für die gesamte Dauer der alternativen Verwendung der Schalen, auf eine andere Weise untergebracht werden muß, was zu Unbequemlichkeiten beim Gebrauch des (überbeladenen) Fahrzeuges, bzw. des Zeltes und/oder des Wohnwagens führt. Diese Unbequemlichkeiten dauern oft für den Großteil des Urlaubs, mit Ausnahme der Zeiten für Hin- und Rückfahrt und der eventuellen Zwischenfahrten samt der vollständigen Ausrüstung, an.

Die Erfindung stellt sich die Aufgabe eine Gepäckbox der eingangs beschriebenen Art zu schaffen, dessen äußere Deckschale aus einem Boot besteht dessen (alternative) Benützung nicht das Umpacken oder Umschichten des Inhaltes bedingt so daß dieser dabei, gegen Staub, Regen und Wind geschützt bleibt und gegen Diebstahl gesichert ist, wobei das Kraftfahrzeug, auch ohne Anbringung dieser äußeren Deckschale, benützt werden kann.

Diese Aufgabe wird erfindungsgemäß von einer Gepäckbox mit den Merkmalen des Anspruchs 1 gelöst. Vorzugsweise werden eigene Fächer mit eigenen Zugrifföffnung für häufig benützte Gegenstände und Vorrichtungen, (z.B.Leiter, Stocker als Steighilfe) für das Be- und

Entladen der Gepäckbox, bzw. für die Montage oder Demontage des Bootes und/oder für den Zeltaufbau, usw, geschaffen.

Es ist eine eher flache Bodenschale mit eventuell ausgeweitetem Auflagerand für das Boot und mit einem nach oben abstehenden Kragen mit Hohlkehle zwecks Anbringung einer Abdeckplane oder einer inneren (steifen) Abdeckschale vorgesehen, wobei der Zugriff zum Gepäck über Öffnungen mit Reißverschluß oder Schiebe- bzw. Klappdeckel und/oder Öffnungsbereiche zwischen Plane oder Abdeckschale und dem nach oben abstehenden Kragen der Bodenschale möglich ist. Im Falle einer steifen, inneren, dichten Abdeckschale ist diese vorzugsweise nach oben schwenkbar indem an einem der Längsränder Scharnierhalterungen vorgesehen sind.

Auch das Boot ist nach oben schwenkbar und abnehmbar scharnierartig an einem der Seitenränder befestigt, während am anderen Rand Einhängelemente vorgesehen sind an welchen Haken oder entsprechende Einschnappelemente eingreifen welche am Rand der Bodenschale der Gepäckbox vorgesehen sind. Diese Haken oder Einschnappelemente sind vorzugsweise von der Art welche beim Schließen der äußeren Deckschale (Boot), selbsttätig einschnappen, während für das Entriegeln ein Hebel vorgesehen ist wodurch, über einen Kabelzug die damit mechanisch verbundenen Haken betätigt werden indem die Kraft einer Zugfeder überwunden wird. Dieser Hebel ist vorzugsweise mit einem Schloß versehen oder ist an der Rückseite, unter der mit Verschluß versehenen Klappe, des unteren separaten Stauraumes angebracht, welcher im hinteren Bereich der Bodenschale vorgesehen ist und für die Ablage von öfters gebrauchtem Zubehör oder von Vorrichtungen welche den Zugriff zum Gepäck erleichtern, z.B. Leiter, Bootszubehör, Campingzubehör, Werkzeug, usw. geeignet ist. Die Bodenschale der erfindungsgemäßen Gepäckbox ist wesentlich durch den nach oben vorstehenden Kragen für die Anbringung der Abdeckplane oder der inneren Abdeckschale versteift; eine weitere Versteifung erfolgt eventuell durch zwei Längshohlräume innerhalb welcher auf einer Seite die Einhängelemente mit deren Betätigungsmechanismus untergebracht sind während auf der gegenüberliegenden Seite die eventuellen Scharnierelemente für die innere Abdeckschale und/oder für die als Boot nutzbare äußere Deckschale vorgesehen sind.

Diese Scharnierelemente können verschiedener Art sein und bestehen vorzugsweise aus einem am Rand der Bodenschale der Gepäckbox verankertem Teil, während der zweite Teil am entsprechenden Rand des Bootes verankert ist oder ebenfalls mit der Bodenschale verbunden ist und in den Rand des Bootes einsetzbar ist. Es ist denkbar, daß ähnliche Scharniere wie sie für Bordwände an LKW-Ladeflächen üblich sind, eingesetzt werden, wobei die Kegel an der Bodenschale befestigt sind und das, in einer bestimmten Anwinkelung, aushängbare Band am Rand des Bootes befestigt ist. Im Falle einer Scharnierverbindung mit, in Bezug auf den Rand des Bootes, innenliegender Schwenkachse ist der Einsatz von Scharnieren vorteilhaft, wie sie hauptsächlich im Möbelsektor Anwendung finden.

Natürlich kann das Boot verschiedene Form aufweisen und die Einhängeelemente und/oder die Scharnierteile können gleichzeitig als Befestigungselemente für Zubehör bei der Verwendung als Boot genutzt werden. Die Erfindung sieht weiters vor, daß die innere steife Abdeckschale an der Außenfläche Halterungen und/oder Ausnehmungen für das Ablegen von Zubehör und/oder von Ausrüstungsgegenständen für Sport oder Tourismus vorgesehen sind. Bei entsprechender Ausformung der inneren Abdeckschale oder Abdeckplane kann das Boot mit Antrieb und mit eventuell klappbaren Zubehören versehen sein welche im Zwischenraum, zwischen der inneren Abdeckschale oder Abdeckplane und dem Boot Platz finden um so dem Benützer ein, mit Zubehör bereits ausgestattetes, gebrauchsbereites Boot, gegebenenfalls samt Antrieb zu bieten.

Vorteilhafterweise kann das Boot einen geeigneten Querschnitt aufweisen, damit dieses, wenn es nicht an der Bodenschale befestigt ist, als Behälter dienen kann; in diesem Fall findet die Bodenschale als Behälterdeckel Verwendung.

Erfindungsgemäß kann die innere Abdeckschale an der Bodenschale seitlich aufklappbar angelenkt sein und in geschlossenem Zustand absperrbar sein, in diesem Fall ist das, über die Abdeckschale gestülpte Boot an der Abdeckschale befestigt und samt dieser aufschwenkbar, dabei sind die Befestigungselemente zwischen Abdeckschale und Boot nur in aufgeschwenkter Position zugänglich. Es ist vorteilhaft vorne und hinten, zwischen Bodenschale und Boot, Schnallen vorzusehen welche, sei es außen am Bootsrand als auch am Außenschalenrand, eingreifen können um die Schließstellung der Außenschale, bzw. des Bootes zusätzlich sichern.

Insbesonders für die Verwendung der Gepäckbox z.B. im Winter und ohne Boot kann eine Abdeckschale mit eher flacher niederer Form angeboten werden, diese kann außen Befestigungselemente aufweisen welche es ermöglichen, im Sommer bei Verwendung des Bootes, Gepäck daran so festzubinden, daß dieses den Stauraum zwischen Abdeckschale und Boot einnimmt.

Die Bodenschale kann erfindungsgemäß auch im Bereich zwischen den Querholmen des Dachträgers oder/und im vorderen Bereich Ablagefächer aufweisen welche separat, eventuell von außen (seitlich) zugänglich sind (Fig. 3).

Im Boot sind vorteilhafterweise Sitze vorgesehen welche aus einer Plane bestehen die an einem seitlich in die Bordinnenwand des Bootes einsetzbare steife Rückenlehne und an einem ebenfalls einsetzbarem Rohr befestigt ist. Sei es die Rückenlehne als auch das Rohr können in unterschiedlichen Positionen eingesetzt werden um so verschiedene Sitzpositionen und Sitzanordnungen anzubieten. Insbesondere Bootszubehör kann platzsparend in entsprechenden Ausschmiegungen an der Bootsinnenwand verstaut und gesichert werden.

An der Bootsaußenwand können Verankerungsschienen für die Anbringung von zusätzlichen, eventuell aufblasbaren Schwimmkörpern (Auftriebskörpern) und/oder von Rädern für die leichtere Beförderung am Boden, vorgesehen sein. Derartige Verankerungsschienen oder -rillen und/oder Befestigungselemente können auch am Heckspiegel des Bootes vorgesehen sein.

Die Erfindung sieht weiters vor, daß die Bodenschale der Gepäckbox auch in das Dach z.B. eines Freizeitmobils oder eines Wohnwagens eingelassen sein kann; in diesem Fall ist die Höhe des Aufbaus begrenzt und es bietet sich als vorteilhaft an, daß die Staufächer der Bodenschale von der Innenseite des Wohnwagens, bzw. des Freizeitmobils zugänglich sind. Die Erfindung wird anschließend anhand von zwei, in den beiliegenden Zeichnungen schematisch dargestellten, vorzuziehenden Ausführungsbeispielen einer erfindungsgemäßen Gepäckbox näher erklärt, dabei erfüllt die Zeichnung rein erklärenden nicht begrenzenden Zweck.

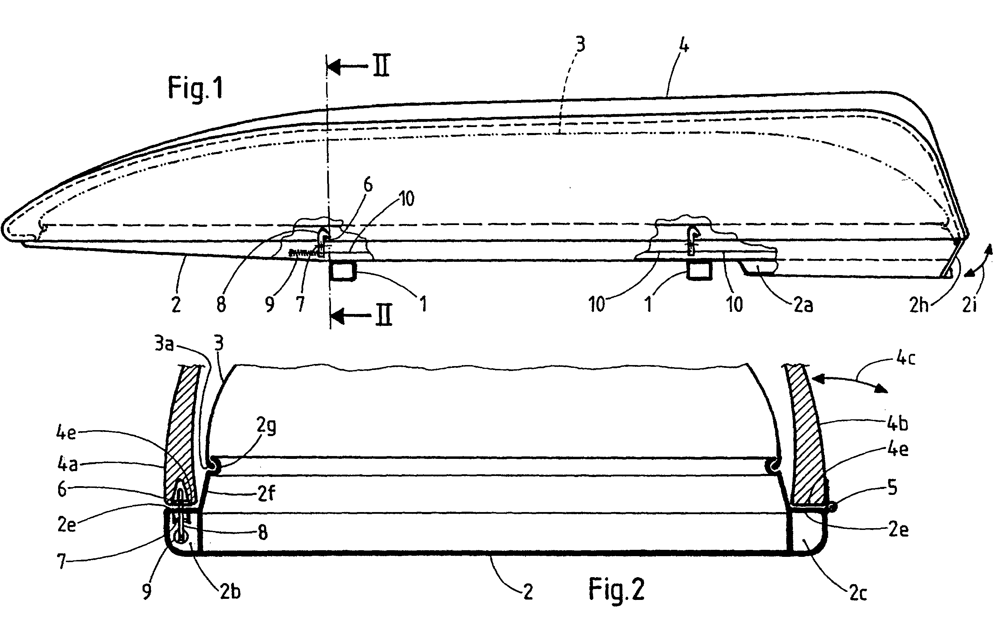

Die Fig. 1 zeigt in Seitenansicht eine erfindungsgemäße Gepäckbox mit zwei Querholmen für die Dachbefestigung, mit einem separaten Stauraum welcher im hinteren Bereich der Bodenschale vorgesehen ist und mit der inneren Abdeckschale oder Abdeckplane welche durch Strich-Punkt-Punkt Linie dargestellt ist; um das Einhängsystem zwischen dem Boot und der Bodenschale der Gepäckbox zu zeigen sind die entsprechenden Bereiche im Schnitt dargestellt.

Die Fig. 2 ist ein teilweiser Querschnitt gemäß der in Fig. 1 gezeigten Schnittfläche II-II durch die Gepäckbox in größerem Maßstab.

Die Fig. 3 zeigt im Längsschnitt eine erfindungsgemäße Gepäckbox wobei die Befestigung des Bootes an der Abdeckhaube mittels Verriegelung C erfolgt, in diesem Fall ist nur die Abdeckschale an der Bodenschale mit Scharnieren verbunden und die Einhänghaken wirken auf den Rand der Abdeckschale.

Die erfindungsgemäße Gepäckbox besteht wesentlich aus einer steifen Bodenschale 2 welche auf bekannte Weise an zwei Querholmen 1 eines Dachträgers verschiedener Herstellungsart befestigt werden kann, aus einer inneren Abdeckschale oder Abdeckplane 3 und aus einer äußeren Deckschale 4 welche als Boot verwendbar ist. Die steife Bodenschale 2 weist einen umlaufenden Rand 2e auf welcher gegebenenfalls ausgeweitet ist und/oder mit, dem Rand 4e der Bootsschale 4 entsprechender, Dichtung versehen ist. An einem der Längsseiten des Randes 2e der Bodenschale 2 sind selbsttätige Einhängelemente für das Boot 4 vorgesehen welche aus zwei, durch Bolzen 7 gelagerte, unter sich verbundene, Haken 8 bestehen welche über einen Kabel 10 mit einem Betätigungshebel verbunden sind und von einer Feder 9 belastet sind welche in Einhängrichtung wirkt. Diese Einhängelemente 8 wirken auf Stifte 6 welche in entsprechender Position am Rand 4e der Bootsschale 4 vorgesehen sind. Die Versteifung der Bodenschale 2 und seine Formstabilität wird durch den inneren, nach oben vorstehenden, Kragen 2f erreicht welcher vorzugsweise eine Rille 2g für die Anbringung der Abdeckplane 3, bzw. für die Befestigung einer inneren Abdeckschale, dient. Die seitlichen Hohlräume 2b, 2c welche sich über den Großteil der Längsränder der Bodenschale 2 erstrecken, sind auf einer Seite für die Anbringung der Einhängelemente 8, 9, 10 und auf der gegenüberliegenden Seite für die Anbringung der Scharnierverbindungen 5 geeignet.

Diese Scharnierverbindungen 5 sind von der aushängbaren Art so daß, sei es eine Schwenkbewegung 4c zwischen der Bodenschale 2 und dem Boot 4, als auch das Aushängen zwischen dem an der Bodenschale 2 befestigtem Scharnierteil und dem entspechenden zweiten Scharnierteil welcher am Seitenrand 4b des Bootes befestigt ist, möglich ist. Die Erfindung schließt nicht den Einsatz von Schwenkscharnieren mit innenliegender Schwenkachse, wie sie im Möbelsektor bekannt sind aus, weiters ist die Verwendung einfacher Bänder möglich welche in einer bestimmten Position hinter Vorsprünge eingeführt werden, das Schwenken 4c des Bootes ermöglichen und nur in einer bestimmten Schwenkstellung das Aushängen zulassen.

Im hinteren Bereich der Bodenschale 2 ist an der Unterseite ein separater Stauraum 2a vorgesehen welcher über eine schwenkbare 2i mit Schloß versehene Klappe 2h zugänglich ist. In diesem Stauraum 2a können Werkzeuge und/oder häufig gebrauchtes Gerät, wie z.B. eine zusammenklappbare Leiter um den Zugriff in die Gepäckbox, bzw. um das Ein- und Aushängen des Bootes 4, zu erleichtern, untergebracht werden. Vorzugsweise ist unter dieser Klappe 2h auch der Betätigungshebel für die Haken 8 untergebracht; auch der seitliche Hohlraum 2c kann durch Öffnen der Klappe 2h zugänglich gemacht werden um so für das Unterbringen von langen rohrförmigen Elementen welche oft als Camping- und/oder Bootszubehör Verwendung finden, genutzt zu werden. Insbesondere die Abdeckplane 3, oder an dessen Stelle die innere Abdeckschale, ermöglicht den Gebrauch des Fahrzeuges mit sämtlichen oder teilweise in der erfindungsgemäßen Gepäckbox verstauten Gepäckstücken, ohne daß diese mit dem Boot 4 versehen ist, wobei das Gepäck abgedeckt und gegen Staub und Regen geschützt ist, weiters können sämtliche Gepäckstücke geordnet in der Box verbleiben und sind über Reißverschlüsse oder über andere, eventuell durch Schlösser gegen Diebstahl gesicherte, Zugriffsöffnungen erreichbar.

## Patentansprüche

1. Gepäckbox bestehend aus einer steifen Bodenschale (2), welche an zwei Querholmen (1) oder an anderen bekannten Befestigungs- oder Trägerelementen befestigbar ist, und aus einer äußeren Deckschale (4), welche als Boot benützt werden kann und welche aufschwenkbar (4c) und von der Bodenschale (2) abnehmbar ist, **dadurch gekennzeichnet, daß** umlaufend in einem zum Rand (4e) der äußeren Deckschale (4) innen liegenden Bereich eine innere steife Abdeckschale oder eine Abdeckplane (3) an der Bodenschale abnehmbar und/oder teilweise aufschwenkbar befestigt ist und daß diese innere Abdeckschale oder Abdeckplane (3) in Schließstellung mittels eines oder mehrerer Schlösser sicherbar ist.

2. Gepäckbox gemäß Patentanspruch 1, **dadurch gekennzeichnet, daß** die innere steife Abdeckschale (3) an der Bodenschale (2) seitlich aufschwenkbar befestigt und an dieser in Schließstellung abschließbar und/oder verriegelbar ist, während die äußere Deckschale (4) in übergestülpter Position an der inneren Abdeckschale (3) in aufgeschwenkter Position von innen her lösbar verriegelbar, bzw befestigbar ist.

3. Gepäckbox gemäß Patentanspruch 1 oder 2, **dadurch gekennzeichnet, daß** die steife Bodenschale (2) im Umfangsbereich und innerhalb, in Bezug auf den Randbereich der äußeren Deckschale (4), in auf die Bodenschale (2) abstehender Position, einen sich nach oben erstreckenden umlaufenden Kragen (2f) aufweist, welcher entlang dem oberen Rand, im unteren Bereich oder in Zwischenpositionen eine Rille (2g) für die Aufnahme des umlaufenden Randes (3a) der Abdeckplane (3), für das Anbringen von Befestigungselementen zwischen Bodenschale und Abdeckplane (3) oder Abdeckschale und/oder für das Anbringen von Scharnierelementen, bzw. von Einhängelementen zwischen der Bodenschale und einer Abdeckschale, aufweist.

4. Gepäckbox gemäß den Patentansprüchen 1 bis 3, **dadurch gekennzeichnet, daß** die steife Bodenschale (2) einen, dem umlaufenden Rand (4e) an der äußeren Deckschale (4) entsprechenden umlaufenden Auflagerand (2e) aufweist, welcher über den Großteil der Längserstreckung durch seitliche Stauräume (2b, 2c) versteift ist, und daß in mindestens einem dieser Stauräume (2b) die Elemente für das selbsttätige Einhängen (8) zwischen der Bodenschale (2) und der äußeren Deckschale (4) angebracht sind, zusammen mit elastischen Rückholelementen (9) und Betätigungselementen (10), um das gleichzeitige Aushängen durch Betätigen eines einzigen Hebels oder Griffes zu erreichen, wobei dieser mit einem Schloß versehen ist oder erst nach erfolgter Öffnung einer mit Schloß versehenen Klappe (2h) zugänglich ist, und daß gegebenenfalls der zweite Stauraum (2c) für die Aufnahme von Scharnieren oder dergleichen, welche ein Schwenken (4c) der äußeren Deckschale (4) und das Abnehmen und wieder Anbringen desselben an der Bodenschale (2) ermöglichen, geeignet ist.

5. Gepäckbox, gemäß einem der Patentansprüchen von 1 bis 3, **dadurch gekennzeichnet, daß** im hinteren unteren Bereich der Bodenschale (2) ein Stauraum (2a) vorgesehen ist, welcher sich vorzugsweise über die gesamte Länge der Bodenschale erstreckt, daß dieser Stauraum über eine hintere, vorzugsweise mit Schloß versehene Klappe (2h), zugänglich ist und daß über die selbe Klappe eventuell auch der seitliche Längsstauraum (2c) und, an der gegenüberliegenden Seite, das Betätigungselement um das Entriegeln zwischen Bodenschale (2) und außerer Deckschale (4) zu bewirken, zugänglich ist.

6. Gepäckbox gemäß den Patentansprüchen von 1 bis 3, **dadurch gekennzeichnet, daß** an der Bodenschale (2) im Bereich zwischen den Querholmen (1) eines Dachträgers und/oder im vorderen Bereich Stauräume (A, bzw.B in Fig.3) vorgesehen sind, welche bei aufgeschwenkter Abdeckschale (3) und/oder über seitliche verschließbare Zugriffsöffnungen zugänglich sind.

7. Gepäckbox gemäß Patentanspruch 1 oder 2, **dadurch gekennzeichnet, daß** die Abdeckplane (3), bzw. die Abdeckschale, verschließbare Öffnungen aufweist und daß in diesem Fall die Abdeckplane mit der Bodenschale auch fest verbunden sein kann, bzw. daß die Abdeckschale mit der Bodenschale fest verbunden sein kann oder mit dieser einstückig ist.

8. Gepäckbox gemäß Patentanspruch 1 oder 2, **dadurch gekennzeichnet, daß** die Abdeckschale oder die Abdeckplane (3) derartige Form hat, daß zwischen dieser und der äußeren Deckschale (4) ein Zwischenraum gebildet wird innerhalb welchem falt- oder klappbares, Bootszubehör und/oder der Bootsantrieb, bzw. anderes Gepäck, Platz findet und daß, insbesondere im Falle einer steifen Abdeckschale (3), diese mit Halterungen und/oder Ausschmiegungen, bzw Fächern für die Aufnahme von Vorrichtungen und Zubehör für Sport, Camping und dergleichen, versehen ist.

9. Gepäckbox gemäß den Patentansprüchen 1 und 2, **dadurch gekennzeichnet, daß** die äußere Deckschale (4) an der Innenseite Ausschmiegungen für die Befestigung von Bootszubehör aufweist und/oder an der Außenseite bzw. am Heckspiegel Verankerungsrillen, Verankerungsprofile und/oder Befestigungselemente für die Anbringung von Zusatzauftriebskörpern, Rädern und/oder anderen Bootsausrüstungen, vorgesehen sind und daß an den Bootswandinnenseiten steife Rückenteile und/oder Rohre in Querrichtung und in verschiedenen Positionen einsetzbar sind um durch, zwischen den Rückenteilen und den Rohren, gespannte Planen, verschiedene Sitzanordnungen und Sitzpositionen zu ermöglichen.

10. Gepäckbox gemäß den Patentansprüchen 1 und 2 **dadurch gekennzeichnet, daß** die Bodenschale (2) in das Fahrzeugdach einsetzbar ist.

## Claims

1. Luggage box comprising a stiff base shell (2), which can be fastened on two crossmembers (1) or on other known fastening or carrier elements, and an outer, top shell (4) which may be used as a boat and can be pivoted open (4c) and removed from the base shell (2), **characterized in that** all the way around, in a region located inside the border (4e) of the outer, top shell (4), an inner stiff covering shell or a covering tarpaulin (3) is fastened on the base shell such that it can be removed and/or partially pivoted open, and **in that** said inner covering shell or covering tarpaulin (3) can be secured in the closed position by means of one or more locks.

2. Luggage box according to Patent Claim 1,
**characterized in that** the inner stiff covering shell (3) is fastened on the base shell (2) such that it can be pivoted open laterally, and it can be locked on said base shell in the closed position, while the outer, top shell (4), in the tilted-over position, can be locked or fastened on the inner covering shell (3) such that it can be released from the inside in the pivoted-open position.

3. Luggage box according to Patent Claim 1 or 2,
**characterized in that**, in the peripheral region and inside the border region of the outer, top shell (4) when the latter is in the position in which it projects down onto the stiff base shell (2), said base shell (2) has an upwardly extending peripheral collar (2f) which, along the top border, in the bottom region or in intermediate positions, has a groove (2g) for accommodating the peripheral border (3a) of the covering tarpaulin (3), for fitting fastening elements between the base shell and covering tarpaulin (3) or covering shell and/or for fitting hinge elements or engagement elements between the base shell and a covering shell.

4. Luggage box according to Patent Claims 1 to 3, **characterized in that** the stiff base shell (2) has a peripheral bearing board (2e) which corresponds to the peripheral border (4e) on the outer, top shell (4) and is stiffened by lateral stowage spaces (2b, 2c) over most of the longitudinal extent, and **in that** fitted in at least one of these stowage spaces (2b) are the elements for the automatic engagement (8) between the base shell (2) and the outer, top shell (4), together with elastic restoring elements (9) and actuating elements (10), in order to achieve simultaneous disengagement by actuation of a single lever or handle, the latter being provided with a lock or only being accessible once a flap (2h) provided with a lock has been opened, and **in that** if appropriate the second stowage space (2c) is suitable for accommodating hinges or the like which make it possible for the outer, top shell (4) to be pivoted (4c) and to be removed and fitted on the base shell (2) again.

5. Luggage box according to one of Patent Claims 1 to 3, **characterized in that** provided in the rear bottom region of the base shell (2) is a stowage space (2a) which extends preferably over the entire length of the base shell, **in that** said stowage space is accessible via a rear flap (2h), preferably provided with a lock, and **in that** possibly also accessible via the same flap are the lateral longitudinal stowage space (2c) and, on the opposite side, the actuating element for providing the unlocking action between the base shell (2) and' outer, top shell (4).

6. Luggage box according to Patent Claims 1 to 3, **characterized in that** provided on the base shell (2), in the region between the crossmembers (1) of a roof rack and/or in the front region, are stowage spaces (A and/or B in Figure 3) which are accessible with the covering shell (3) pivoted open and/or via lateral closeable access openings.

7. Luggage box according to Patent Claim 1 or 2, **characterized in that** the covering tarpaulin (3) or the covering shell has closeable openings, and **in that**, in this case, the covering tarpaulin may also be fixed to the base shell, and/or that the covering shell may be fixed to the base shell or is integral therewith.

8. Luggage box according to Patent Claim 1 or 2, **characterized in that** the covering shell or the covering tarpaulin (3) is of such a shape that an interspace is formed between it and the outer, top shell (4), foldable or collapsible boat accessories and/or the boat drive or other luggage being accommodated within said interspace, and **in that**, in particular in the case of a stiff covering shell (3), the latter is provided with securing means and/or bevelled recesses or compartments for accommodating apparatuses and accessories for sports, camping and the like.

9. Luggage box according to Patent Claims 1 and 2, **characterized in that**, on the inside, the outer, top shell (4) has bevelled recesses for fastening boat accessories, and/or anchoring grooves, anchoring profiles and/or fastening elements for fitting additional floats, wheels and/or other boat equipment are provided on the outside or on the transom, and **in that** stiff backrest parts and/or tubes can be inserted transversely, and in different positions, on the insides of the boat walls in order, by way of tarpaulins stretched between the backrest parts and the tubes, to allow various seat arrangements and seat positions.

10. Luggage box according to Patent Claims 1 and 2, **characterized in that** the base shell (2) can be inserted into the vehicle roof.

## Revendications

1. Boîte porte-bagages formée d'une coque inférieure (2) rigide, susceptible d'être fixée sur deux montants transversaux (1) ou bien sur d'autres éléments de fixation ou supports connus, et d'une coque de couverture (4) extérieure, qui peut être utilisée comme canot et qui peut être ouverte par pivotement (4c) et être enlevée de la coque inférieure (2), **caractérisée en ce qu'**en pourtour, dans une zone située intérieurement au bord (4e) de la coque de couverture extérieure (4) est fixée sur la coque inférieure, de façon amovible et/ou pouvant être ouverte partiellement par pivotement, une coque de recouvrement rigide intérieure ou bien une bâche de recouvrement (3) intérieure et **en ce que** cette coque de recouvrement intérieure ou bâche de recouvrement (3) peut être fixée en position de fermeture au moyen d'une ou plusieurs serrures.

2. Boîte porte-bagages selon la revendication 1, **caractérisée en ce que** la coque de recouvrement (3) rigide intérieure est fixée sur la coque inférieure (2) d'une façon permettant une ouverture par pivotement sur le côté et est refermable et/ou verrouillable sur celle-ci en position de fermeture, tandis que la coque de couverture extérieure (4), lorsqu'elle est en une position chapeautant la coque de recouvrement (3) intérieure placée en une position ouverte par pivotement, peut être verrouillée ou peut être fixée de façon désolidarisable depuis l'intérieur.

3. Boîte porte-bagages selon la revendication 1 ou 2, **caractérisée en ce que** la coque inférieure (2) rigide présente, dans la zone périphérique et à l'intérieur, en référence à la zone de bordure de la coque de couverture extérieure, en une position en saillie sur la coque inférieure (2), une collerette (2f) faisant le pourtour et s'étendant vers le haut, collerette qui, le long du bord supérieur, présente, dans la zone inférieure ou bien en des positions intermédiaires, une gorge (2g) pour recevoir le bord (3a) de pourtour de la bâche de recouvrement (3), pour le montage d'éléments de fixation entre la coque inférieure et la bâche de recouvrement (3) ou la coque de recouvrement et/ou pour le montage d'éléments de charnière ou d'éléments d'accrochage entre la coque inférieure et une coque de recouvrement.

4. Boîte porte-bagages selon les revendications 1 à 3, **caractérisée en ce que** la coque inférieure (2) rigide présente une bordure de pose (2e) de pourtour correspondant au bord (4e) de pourtour réalisé sur la coque de couverture extérieure (4), bordure de pose rigidifiée sur la majeure partie de la longueur par des espaces de retenue (2b, 2c) latéraux, et **en ce que**, en au moins l'un de ces espaces de retenue (2b), les éléments prévus pour l'accrochage (8) automatique entre la coque inférieure (2) et la coque de couverture extérieure (4) sont montés, conjointement avec des éléments de rappel (9) élastiques et des éléments d'actionnement (10), afin d'obtenir le décrochage simultané par actionnement d'un levier ou d'un poignée unique, sachant que ce levier ou poignée est muni(e) d'une serrure ou bien ensuite, une fois effectuée l'ouverture d'un volet (2h) muni d'une serrure, est accessible, et **en ce que**, le cas échéant, le deuxième espace de retenue (2c) convient pour recevoir des charnières ou analogues qui permettent un pivotement (4c) de la coque de couverture extérieure (4) et l'enlèvement et le remontage de celle-ci sur la coque inférieure (2).

5. Boîte porte-bagages selon l'une des revendications 1 à 3, **caractérisée en ce que**, dans la zone inférieure arrière de la coque inférieure (2) est prévu un espace de retenue (2a) s'étendant de préférence sur toute la longueur de la coque inférieure, **en ce que** cet espace de retenue est accessible par l'intermédiaire d'un volet (2h) arrière muni, de préférence, d'une serrure, et **en ce que**, sur le même volet, éventuellement, l'espace de retenue longitudinal latéral (2c) est également accessible et, sur le côté opposé, l'élément d'actionnement pour provoquer le déverrouillage entre la coque inférieure (2) et la coque de couverture extérieure (4).

6. Boîte porte-bagages selon les revendications 1 à 3, **caractérisée en ce que** sur la coque inférieure (2), dans la zone située entre les montants transversaux (1) d'un support de toit et/ou dans la zone avant, sont prévus des espaces de rangement (A, B sur la figure 3) qui sont accessibles lorsque la coque de recouvrement (3) est ouverte par pivotement et/ou par l'intermédiaire d'ouvertures d'accès latérales obturables.

7. Boîte porte-bagages selon la revendication 1 ou 2, **caractérisée en ce que** la bâche de recouvrement (3) ou la coque de recouvrement présente des ouvertures obturables, et **en ce que**, dans ce cas, la bâche de recouvrement peut être reliée rigidement également à la coque inférieure, ou **en ce que** la coque de recouvrement peut être reliée rigidement à la coque inférieure ou est réalisée d'une seule pièce avec celle-ci.

8. Boîte porte-bagages selon la revendication 1 ou 2, **caractérisée en ce que** la coque de recouvrement ou la bâche de recouvrement (3) a une forme telle qu'entre celle-ci et la coque de recouvrement extérieure (4) est formé un espace intermédiaire à l'intérieur duquel peuvent être logés des accessoires de canot, pliables ou rabattables, et/ou le propulseur du canot ou un autre bagage, et **en ce que**, en particulier dans le cas d'une coque de recouvrement (3) rigide, celle-ci est munie de fixations et/ou d'ébrasures ou de compartiments pour recevoir des dispositifs et des accessoires pour le sport, le camping et analogues.

9. Boîte porte-bagages selon les revendications 1 et 2, **caractérisée en ce que** la coque de couverture extérieure (4) présente sur la face intérieure des ébrasures pour fixer un accessoire de canot et/ou, sur la face extérieure ou sur le rétroviseur sont prévues des rainures d'ancrage, des profilés d'ancrage et/ou des éléments de fixation pour le montage de corps de flottaison supplémentaires, de roues et/ou d'autres équipements de canot, et **en ce que** sur les côtés intérieurs de la paroi du canot peuvent être insérées des parties de dossier rigides et/ou des tubes, placé(e)s dans la direction transversale et dans différentes positions, afin de permettre différents agencements de siège et positions de siège, au moyen de bâches tendues entre les parties de dossier et les tubes.

10. Boîte porte-bagages selon les revendications 1 et 2, **caractérisée en ce que** la coque inférieure (2) est susceptible d'être insérée dans le toit du véhicule.
